(19) Europäisches Patentamt
European Patent Office
Office européen des brevets

(11) **EP 2 567 891 A1**

(12) **EUROPEAN PATENT APPLICATION**
published in accordance with Art. 153(4) EPC

(43) Date of publication:
**13.03.2013 Bulletin 2013/11**

(51) Int Cl.:
**B64C 3/14** $^{(2006.01)}$

(21) Application number: **11838305.8**

(86) International application number:
**PCT/RU2011/000744**

(22) Date of filing: **29.09.2011**

(87) International publication number:
**WO 2012/060735 (10.05.2012 Gazette 2012/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **01.11.2010 RU 2010144348**

(71) Applicants:
• **Totorkulov, Aliy Khasanovich**
**117303 Moscow (RU)**

• **Baziev, Dzhabrail Kharunovich**
**Nalchik 360051 (RU)**

(72) Inventor: **BAZIEV, Dzhabrail Kharunovich**
**NALCHIK 360051 (RU)**

(74) Representative: **Moser, Jörg Michael**
**Moser & Götze**
**Patentanwälte**
**Paul-Klinger-Strasse 9**
**45127 Essen (DE)**

(54) **METHOD FOR FORMING LIFTING FORCE FOR AN AIRCRAFT AND WING PROFILE FOR REALIZING SAID METHOD (ALTERNATIVES)**

(57) Unique aeroplane wing profiles substantially increasing the aerodynamic qualities of the wing are proposed. The advantage of the proposed profiles and novel method for forming lifting force for a wing on the basis of said profiles is the complete shifting of the interaction of the windstream onto the lower contour, the complete liberation of the upper contour from interaction with the windstream, leading to the elimination of wave drag - an insurmountable defect in wings with a classic profile, and a substantial increase in lifting force for the wing. Novel solutions are given which were the basis for a basically novel interpretation of the process of flow around a wing by the windstream and of the formation of excess pressure along the lower surface.

Fig. 1

**EP 2 567 891 A1**

**Description**

The invention refers to aerodynamics and can be used to create an aircraft, as well as rotors for helicopters, propellers for piston airplanes and propeller screws for water transport.

There is a large number of wing profiles known [S.T. Kashafutdinov, V.N. Lushin, Atlas of the aerodynamic characteristics of wing profiles, Novosibirsk, 1994]. They are united by one common disadvantage - forming lifting force for a wing by means of the creation of a vacuum on the upper contour of the wing with the part of the windstream.

Known is a method for forming lifting power, where a wing with NACA-0012 profile [Helicopters of countries around the world. Edited by V.G. Lebed, 1994] by the angle of incidence 6 = 0° does not form lifting power at all as the front edge divides the windstream into two equal parts: onto the upper and lower contour. Only by the angle of incidence 6 ≥ 1 ° symmetry breaking occurs in the distribution of the windstream, which leads to a difference in pressure between the upper and lower surfaces of the wing.

There is also a method for forming lifting power known, where a wing with NACA-23012 profile [Helicopters of countries around the world. Edited by V.G. Lebed, 1994] is asymmetric, and most of the windstream is directed onto the upper contour which is subjected to uniform compression in the AB area, gains a large amount of kinetic energy and represents in the BC area a thin (0.5-2 mm) high-speed stream with two main functions: a dynamic barrier between the upper surface of the wing and unperturbed atmosphere above the BC and a gas jet pump, rapidly outflowing the air molecules out of the BCD area and creating a vacuum with a critical limit in it, by reaching this limit the stream BC falls to the wing surface BD with an impact. As a result, the BCD area is filled with air until it reaches the unperturbed air pressure at the flight level of an aircraft, and speed stream BC is restored again. This is one cycle of wave drag of the upper surface of the wing in the area of negative angles of incidence BCD. The process is self-oscillating and while an aircraft nearing the speed of sound it becomes a major obstacle to develop high speeds.

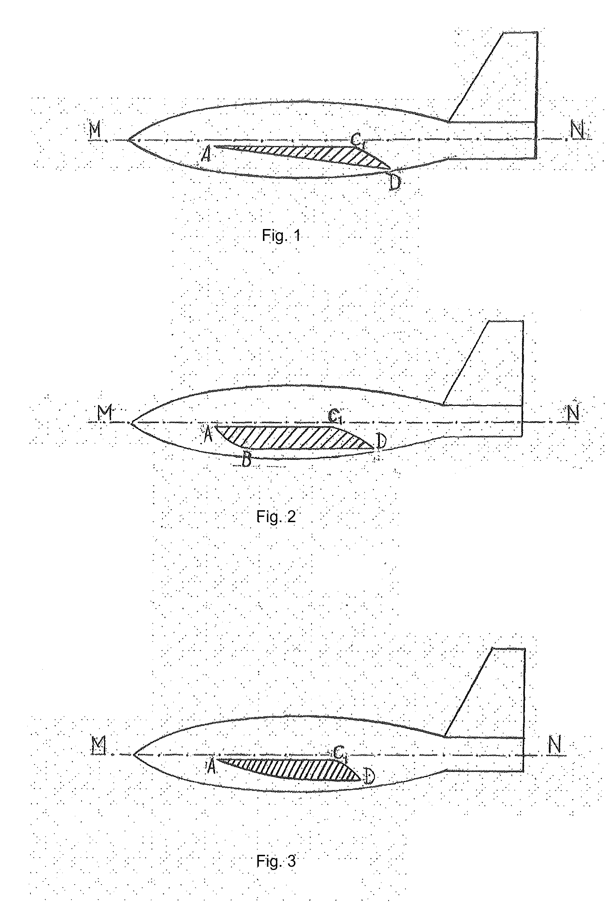

There is a profile known which differs from a classic one with geometric features similar to the element of our profile. There is a wing (Fig. 1) known from the American patent No. 6378802 (IPC: B64C 30/00, published on April 30, 2002) taken as a prototype for claimes 1, 3 and 4 of the invention. The main difference of the prototype from a classic profile is that the acute angle of its front edge does not divide the windstream into 2 parts onto the upper and lower contour, like it does the rounded front edge of the classic profile. According to Fig.1 from U.S. Pat. No. 6378802 and its description, forming lifting force for such profile involves only front and back sections, which constitutes 32% onto upper and lower contour of the wing, whereas aviation age-long experience proved that lifting force is always proportionate to the complete area S of a wing.

The disadvantage of the prototype is low efficiency of forming lifting force caused by occurrence of wave drag onto the upper contour of the wing which reduces its lifting force by 1 unit of the wing area.

There is also a symmetrical plane-wedge profile of a wing known from Pat. RF No. 2 2207967 (IPC: B64C 23/06, released on July 10, 2003). It was taken as a prototype for a wing profile according to claim 2.

The disadvantage of such wing is existence of 2 terminating at right angle tailing edges, which create the basis of powerful turbulent resistance that decreases aircraft efficiency.

The aim of the proposed invention is rising efficiency of forming lifting force through elimination of wave drag onto the upper contour of the wing and lift benefit by 1 unit of the wing area. Another aim is liberation of the wing from aerodynamic flutter.

These aims can be obtained by the method for forming lifting force for an aircraft with a longitudinal axis and a wing, which has a part of its upper contour of the profile as a straight line, includes creation of an acute angle of the front edge, straight line of the upper contour is parallel to the longitudinal axis of an aircraft, meanwhile the sharp front edge directs the windstream onto the lower contour of the wing.

To realize method for an aircraft with a longitudinal axis and a wing a wing profile was created. It has sharp front and tailing edges, as well as the upper and lower contours, meanwhile said lower contour is rectilinear from the front to the tailing edge, and said upper contour has a rectilinear section parallel to the longitudinal axis of an aircraft and connected with tailing edge by a flat curve.

Other alternative of an aircraft wing profile which can realize the claimed method is a wing profile of an aircraft with a longitudinal axis and a wing which has sharp front and tailing edges, as well as the upper and lower contours, partially represented by parallel lines, the above mentioned rectilinear sections of the upper and lower contours are connected with the front and tailing edges by flat curves, whereas the upper contour is parallel to the longitudinal axis of an aircraft.

A third alternative of an aircraft wing profile which can realize the claimed method is a wing profile of an aircraft with a longitudinal axis and a wing which has sharp front and tailing edges, as well as the upper and lower contours, whereas the upper contour has a rectilinear section, and the above mentioned rectilinear section of the upper contour is parallel to the longitudinal axis of an aircraft, and the lower contour is represented by a flat curve connecting the front and tailing edge of a wing profile.

It's rather difficult to define lifting force for a wing with the proposed profiles on the basis of known equations.

Therefore a new equation is proposed which considers height of the master cross-section of the wing, chord length, air pressure at the flight level and linear velocity of air molecules as follows:

$$Y_i = (P_{0i} - \frac{\rho_i \cdot \upsilon_{\mu i} \cdot \upsilon_i \cdot h_i \cdot a}{8\pi^2 \cdot b_i}) \cdot S_i, N,$$

where

$Y_i$ - lifting force for a wing, N.
$S_i = L_i \cdot b_i$ - area of a wing, m$^2$.
$L_i$ - wingspan, m.
$b_i$ - chord length, m.
$\rho_i$ - air density at the flight level, kg/m$^3$.
$\upsilon_{\mu i}$ - linear velocity of air molecules, m/s.
$\upsilon_i$ - speed of an aircraft, m/s.

$h_i$ - height of the master cross-section of a wing, average, m. $a = \sqrt[3]{4\pi/3} = 1,611991954 = const,$

$P_{0i}$ - air pressure at the flight level, N/m$^2$,
lifting force coefficient ($C_y$) is calculated by the following equation:

$$C_{yi} = \frac{(P_{0i} - \frac{\rho_i \cdot \upsilon_{\mu i} \cdot \upsilon_i \cdot h_i \cdot a}{8\pi^2 \cdot b_i}) \cdot S_i}{m_i \cdot g_i} > 1,$$

where
$m_i$ - all-up weight of an aircraft, kg,
$g_i$ - Gravitational acceleration, m/s$^2$.

The invention is explained in figures where:

Fig. 1 illustrates the proposed aircraft with a wing profile according to claim 2, where
AD=b is a chord and lifting surface of the wing;
$AD_1 = b_1$ - outer chord,
$AC_1$- horizontal section of the upper contour,
$C_1D$ - section of the flat curve forming the tailing edge of a wing,
$DD_1 = h$ - height of the master cross-section,
$CC_1$ - maximal thickness of a wing,
angle $DAC_1 = \beta$ - angle of divergence of the upper and lower contours at the front edge.

Fig. 2 illustrates an aircraft with a wing profile according to claim 3 of the claim, where
AD= b - a chord without any function load by this profile;
$AD_1 = b_1$ - outer chord,
AB - a flat curve connecting upper and lower horizontal sections $AC_1$ and BD and forming a nose of the profile;
$BB_1 = CC_1 = DD_1 = h$ - height of the master cross-section,
$\alpha$ - angle of incidence on the master cross-section at the curve AB,
angle $BAB_1 = \beta$ - angle of divergence of the upper and lower contours at the front edge;
$C_1D$ - a curve forming the tailing edge of a wing,
MN - a tangent line to the middle point of the curve AB.

Setting angle of the wing with this profile is 0, so is angle of incidence on the lower lifting surface BD.

Fig. 3 illustrates an aircraft with a wing profile according to claim 4, where
$AC_1$- straight line of the upper contour,

AD - a flat curve connecting the front and tailing edges,

$C_1D$ - a flat curve connecting the straight line of the upper contour with the tailing edge.

The proposed wing profiles provide interaction of the windstream with the lower contour only, which is represented by segment (AD) connecting the front edge (A) with the tailing edge (D) and simultaneously being a chord (b). In this case on the upper contour ($AC_1D$) there is no speed stream as the sharp front edge directs all windstream onto the lower contour (AD). The main part of the upper contour is represented by a straight line ($AC_1$), and its tail section ($C_1D$) smoothly descends to the tailing edge. Pressure at the upper contour ($AC_1$) is almost equal to the pressure of unperturbed air at the flight level, while the upper surface is parallel to speed vector of an aircraft, which is a qualitatively new and essential feature of the proposed method. The function of forming lifting force for a wing completely shifts onto the lower contour (AD). The following results are achieved:

1) Complete liberation of the upper contour of the wing from interaction with the windstream.
2) Shifting of the interaction of the wing with the environment completely onto the lower contour.
3) Efficient use of the wall boundary layer for lifting force increase.
4) Introduction of thickness ($h$), angle of incidence ($\alpha$), wall boundary layer thickness ($\Delta h$), linear velocity of air molecules ($\upsilon_M$) in the analysis and calculation of lifting force for a wing.
5) Liberation of the wing from wave drag - an insurmountable defect in wings with a classic profile.
6) Minimal frontal drag of the wing and its high aerodynamic quality.

A dynamic parameter used for calculation of lifting force for a wing with classic aerodynamics is dynamic pressure which is applied to the empirically selected lifting force coefficient ($C_y$), and lifting force ($Y$) is calculated by the formula [Encyclopedia of physics. Vol. 3, page 670, 1992]:

$$Y = C_y \cdot \rho \upsilon^2 \cdot s/2, \; N, \text{ where} \qquad (1)$$

$\rho$ - air density, $kg/m^3$,
$\upsilon$ - speed of an aircraft, $m/s$,
$s$ - area of a wing, $m^2$.

The following equation is true for an aircraft on cruise flight:

$$Y = m \cdot g, \; N, \text{ where} \qquad (2)$$

$m$ - weight of an aircraft, $kg$,
$g$ - Gravitational acceleration at the flight level, $m/s^2$;
after equating the right parts (1) and (2) and solving the equation for $C_y$ one will get the following:

$$C_y = \frac{m \cdot g}{\rho \upsilon^2 \cdot s/2} \qquad (3)$$

Some important parameters are not considered in formulas (1), (2) and (3), such as thickness of a wing ($h$), angle of incidence ($\alpha$), pressure on the upper surface of a wing $\left(P_\theta\right)$, pressure on the lower surface of a wing ($P_H$), velocity of air molecules ($\upsilon_M$), thickness of the wall boundary layer ($\Delta h$). The biggest paradox, however, is the contradiction between (1) and (3). According to (1), the greater lifting force coefficient ($C_y > 1$) - the greater lifting force for a wing and the easier it is for an aircraft to take off, the shorter the take-off path etc. But according to (3), if $C_y > 1$, the weight of an aircraft is greater than lifting force for a wing and it cannot take off.

Therefore the calculation above shows that classic aerodynamics lacks a theory of flow around a wing which moves through unperturbed air.

There is a corresponding mathematic model for a wing with the patented profile proposed. It is based on the assumption that lifting force for a wing is a result of difference in pressure between upper ($P_B$) and lower ($P_H$) surfaces and it can be expressed in the following equation (4):

$$Y = (P_e - P_H) \cdot s, \, N \tag{4}$$

Since pressure on the upper surface of a wing with the proposed profile B-1 is always equal to pressure of unperturbed air ($P_{0i}$) at the flight level ($P_{ei} = P_{0i}$), after expanding (4) one will get:

$$Y_i = \left( P_{0i} - \frac{\rho_i \cdot \upsilon_i \cdot \upsilon_{\mu i} \cdot \alpha \cdot tg\beta}{8\pi^2} \right) \cdot s, \, N,$$

where $\tag{5}$

$P_{0i}$- unperturbed air pressure at the flight level, $N/m^2$,
$\rho_i$ - unperturbed air density at the flight level, $kg/m^3$,
$\upsilon_i$ - speed of an aircraft, $m/s$,
$\upsilon_{\mu i}$ - linear velocity of air molecules at the flight level, $m/s$.
Under normal conditions ($t = 0°C$, $P_0 = 101\,325\,Pa$) velocity of air molecules is $\upsilon_{\mu i} = 47131,725\,m/s$. [D.H. Baziev Fundamentals of a unified theory of physics. Moscow, Pedagogics, 1994, p. 619]
$tg\beta = h/b_1$ - relation between average height of the master cross-section and outer chord,

$h$ - height of the master cross-section (Fig. 2), $m$,  $\alpha = \sqrt[3]{4\pi/3} = 1,0611991954 = const$

$\beta$- angle of divergence of the upper and lower contours at the front edge of a wing,
$s = L \cdot b$ - area of a wing, $m^2$,
$L$ -wingspan, $m$,
$b$ - chord of a wing, AD (Fig. 2 and 3), $m$.
$b_1$- outer chord $AD_1$ (Fig. 2 and 3), $m$.

Introducing values $Y_i = c_y \cdot m_i g_i$ and $tg\beta$ in (5), one gets a completed equation for lifting force for a wing with the proposed profile B-1. It does not have any coefficients, since all physical and geometric parameters have been taken into account, which take part in forming lifting force for a wing ($Y$) for subsonic speeds of an aircraft ($\upsilon \le 1M$):

$$c_y \cdot m_i \cdot g_i \le \left( P_{0i} - \frac{\rho_i \cdot \upsilon_i \cdot \upsilon_{\mu i} \cdot h_i \cdot \alpha}{8\pi^2 \cdot b_i} \right) \cdot S, \, N, \tag{6}$$

where $c_y \ge 1,01$ - lifting force coefficient of a wing.
From (6) it follows that in take-off mode the right part of an aircraft must be higher than the left one, i.e. lifting force is greater than take-off weight of an aircraft. And on cruise flight weight and lifting force of an aircraft become equal. Meanwhile the value of lifting force in (6) always takes a negative sign which shows that this force is directed against the gravitational force vector, i.e. upwards.

$$Y_i = \left( P_{0i} - \frac{\rho_i \cdot \upsilon_i \cdot \upsilon_{\mu i} \cdot \alpha \cdot h_i}{8\pi^2 \cdot b \cdot \gamma} \right) \cdot S_i \tag{7}$$

- equation for lifting force for a wing for aircraft speeds ($\upsilon > 1M$), where M is Mach number, $\gamma = 1,36805912$ is adiabatic coefficient of air in the wall boundary layer by $\upsilon > 1\,M$

The following are examples of practical use of the invention.
Example 1. Fig. 1 illustrates a wing profile, where AD is a chord and the lower contour; $AC_1D$ is the upper contour; $CC_1$ is the largest thickness of a profile; $DD_1 = h$ - height of the master cross-section of a wing; angle $CAC_1 = \beta$ - angle of divergence of the upper and lower contours. As one can see in Fig. 2, the proposed variant has an acute-angled front edge with the following features:

1) Exceptionally acute nose angle, $CAC_1 = \breve{}{}'$ which is the angle of divergence of the upper and lower contours, while the front edge of a wing (A) for supersonic aircrafts is extremely sharp like blade.

2) The lower contour (AD) - chord (b) - is a straight line forming a high-speed wall boundary layer, which has a large amount of kinetic energy and causes excess pressure along the lower surface of a wing (AD). A wing with this profile has minimal frontal drag and maximal lifting force and as a result extremely high aerodynamic quality against the prototype.

3) The main part of the upper contour ($AC_1$) is represented by a horizontal straight line parallel to the motion vector of the aircraft wing or to the aircraft main longitudinal axis. The tail section of the upper contour from the point of the largest thickness ($C_1$) of a profile up to the tailing edge (D) is performed as a flat curve ($C_1D$). Because of the sharp front edge (A), which is the beginning of the upper contour, the interaction of the windstream with the upper contour is completely avoided, which leads to the elimination of wave drag and liberation from aerodynamic flutter in all flight modes of the aircraft.

Example 2. Fig. 2 illustrates a wing profile, where A is a moderately sharp front edge, B is the beginning of the lifting surface of a wing (BD), AB is a flat curve connecting the lower and upper contours forming the front edge, $C_1D$ is a flat curve connecting the upper contour with the tailing edge.

Distinctive features of this profile are as follows:

1) The main parts of the upper contour $AC_1$ and the lower contour BD can be parallel or not, it depends on the radius of curvature AB (Fig. 2) and the height of the master cross-section.

2) The sharp front edge directs all windstream under the wing onto the lower contour because there is no angle of incidence in the upper contour which is caused by parallel alignment of the upper contour to the longitudinal axis of the aircraft.

3) The windstream interacts only with the lower contour (ABD) which has no segment with negative angle of incidence. Also, as studies showed, a high-speed wall boundary layer is formed along the lower contour at speed $\upsilon \leq 0{,}6\ M$, at speed $\upsilon > 0{,}6\ M$ the wall layer ends at point (B), but because of the windstream a densified underlayer is formed under the wing, this underlayer supports the lifting surface of the wing (BD), as a result specific lifting force for a wing with this profile is two times greater than of the prototype. This feature becomes apparent when a wing moves through unperturbed air.

This is the basic profile, which can be used to design a series of profiles by changing angle of divergence of the upper and lower contours between 0° and 90°, and also by changing the height of the master cross-section widely. Supersonic aircrafts are equipped with wings with sharp front edges and acceptably low value of the master cross-section height, which depends on several technical conditions. Heavy-duty aircrafts are equipped with this profile or its variations, in this case height of the master cross-section depends on take-off weight and speed on the flight strip at the moment of take-off. The upper contour of the wing profile ($AC_1$) is parallel to the motion vector of the aircraft or to the aircraft main longitudinal axis. Thus, setting angle of the upper surface of a wing with the proposed profile is 0°, while setting angle of a wing with the classic profile is always greater than zero and changes between 2° and 6°.

Example 3. Fig. 3 illustrates a wing profile, where A is a sharp front edge, $AC_1$ is a rectilinear section of the upper contour, $C_1D$ is a flat curve connecting the upper contour with the tailing edge, and AD is a flat curve connecting the front and tailing edges forming the lower contour.

Concept of the invention has been confirmed by the practical realization of the method.

Example of realization of the proposed method for forming lifting force for a wing and devices for realizing said method.

In order to confirm the realizability of the method and efficiency of the devices, four wing models with profiles according to Fig 1 and Fig. 2 and NACA-23015 profile with the same geometric parameters (wingspan, chord and wing thickness) were constructed.

The test model was mounted on an AC commutator motor shaft with capacity of *W* = 400 *W*, and speed *n* = 14 000 *rpm.* The motor with the wing was installed on a massive platform which was fixed on an electronic balance pan "Nikoteks NPV-15 kg" with tolerance $\Delta = \pm\ 0{,}005$ kg. The balance pan was shielded by a large impenetrable duralumin disk.

The wing models were made of magnesium-aluminum alloy, their surface was thoroughly polished.

Experimental studies confirmed higher efficiency of wings with proposed profiles compared to the prototype representing a wing with the classic profile forming lifting force mainly through creation of exhaustion along the upper contour. The results are shown in tables 1-4 (see APPENDIX). Specific lifting force for a wing ($Y_s$, $N/m^2$) as a function of speed x is accepted as the control dynamic parameter. Let us compare the wing with the profile according to Fig. 1 with other wings: with the profile according to Fig. 2 and NACA-23015 profile assuming that wing motion speeds through unperturbed air are equal:

# EP 2 567 891 A1

1) $\upsilon_3$ = 25,068 $m/s$ (B-1, table 1), $Y_{s3}$ = 247,944 $N/m^2$,
$\upsilon_1$ = 25,917 $m/s$ (NACA, table 2), $Y_{s1}$ = 64,378 $N/m^2$,
$k_1 = Y_{s3}/Y_{s1}$ = 3,85.
2) $\upsilon_{11}$ = 62,777 $m/s$ (B-1, table 1), $Y_{s11}$ = 1724,982 $N/m^2$,
$\upsilon_5$ = 62,207 $m/s$ (NACA, table 2), $Y_{s5}$ = 287,807 $N/m^2$,
$k_2$ - $Y_{s11}/Y_{s5}$ = 5,993.
3) $\upsilon_9$ = 69,309 $m/s$ (B-2, table 3), $Y_{S9}$ = 1105,787 $N/m^2$,
$\upsilon_6$ = 69,309 $m/s$ (NACA, table 2), $Y_{s6}$ = 355,972 $N/m^2$,
$k_3 = Y_{s9}/Y_{s6}$ = 3,106.
4) $\upsilon_{10}$ = 56,516 $m/s$ (B-1, table 1), $Y_{s10}$ = 1388,486 $N/m^2$,
$\upsilon_6$ = 56,413 $m/s$ (B-2, table 3), $Y_{s6}$ = 708,158 $N/m^2$,
$k_4$ $Y_{s10}/Y_{s6}$ = 1,9607.

As ensues from this comparison of experimental results, the wing with the profile according to Fig. 1 indicates a substantial advantage in all four examples over the prototype and the wing with profile according to Fig. 2, it is reflected by coefficient k.

Analysis of the results confirms that the proposed method for forming lifting force for a wing and series of profiles based on Fig. 2 for realizing said method are considerably better than the classic method and the classic profile.

Based on the above, one can make a conclusion that the proposed method for forming lifting force for a wing and devices for realizing said method can be implemented in practice with reaching the indicated technical result.

Bibliography

1. A.M. Volodko, M.P. Verkhozin, V.A. Gorshkov Helicopters. Guidebook. Moscow, Military edition, 1992.
2. E.I. Ruzhitsky Helicopters. Moscow, Victoria, AST, 1997.
3. Helicopters of countries around the world. Edited by V.G. Lebed, Moscow, 1994.
4. D.H. Baziev Fundamentals of a unified theory of physics. Moscow, Pedagogics, 1994, 640 pages.
5. V.N. Dalin Specifications and construction of helicopters. Moscow, 1983.
6. T.I. Ligum, S.Y. Skripchenko, L.A. Chulsky, A.V. Shishmarev, S.I. Yurovsky Aerodynamics of the Tu-154 airliner. Moscow, Transport, 1977.
7. S.T. Kashafutdinov, V.N. Lushin Atlas of the aerodynamic characteristics of wing profiles, Novosibirsk, 1994.
8. Encyclopedia of physics. Moscow, 1992, Vol. 3.

Table 1.

| Testing results of a wing with a profile according to Fig. 2 Wing geometry: $L = 0,322\ m$; $b = 0,04\ m$; $h = 6\ mm$, $S = 0,01288\ m^2$; $S_m = 0,001\ 932\ m^2$; $m_1 = 0,275\ kg$; $G_1 = m_1 g_M = 2,699331\ N$; $\alpha = 30°$. Laboratory conditions: $P_0 = 98791,875\ Pa$; $t_0 = 15°\ C$, $\rho_0 = 1,19496\ kg/m^3$. | | | | | | | |
|---|---|---|---|---|---|---|---|---|
| No. | Rotational frequency n, rps | Average circumferential speed $u=2\pi R \cdot n$, m/s | Lifting force for a wing $Y$, $N$ | Excess pressure along the lower surface, Pa $\Delta P = Y/S$ | Pressure along the lower surface $P_H = \Delta P + P_0$, | Wall boundary layer speed, m/s | $\beta = u_\pi/u$ | Wall boundary layer thickness, mm $\Delta h = h/\beta$ |
| 1 | 26,667 | 18,179 | 0,932 496 | 72,399 | 98 864,774 | 287,636 | 15,822 424 | 0,379 208 |
| 2 | 44,258 | 30,172 | 2,453 938 | 190,989 | 98 989,864 | 287,808 | 9,538 920 | 0,629 002 |
| 3 | 60,133 | 40,994 | 4,711 560 | 365,804 | 99 157,678 | 288,062 | 7,026 939 | 0,853 856 |
| 4 | 68,167 | 46,471 | 6,233 002 | 483,928 | 99 275,803 | 288,234 | 6,202 440 | 0,967 359 |
| 5 | 75,592 | 51,533 | 7,656 286 | 594,432 | 99 386,307 | 288,394 | 5,596 302 | 1,072 136 |
| 6 | 82,750 | 56,413 | 9,177 727 | 712,557 | 99 504,432 | 288,566 | 5,115 232 | 1,112 967 |
| 7 | 89,500 | 61,014 | 10,601011 | 823,059 | 99 614,935 | 288,726 | 4,732 123 | 1,267 929 |
| 8 | 95,917 | 65,389 | 12,367 846 | 960,237 | 99 752,112 | 288,924 | 4,418 549 | 1,357 912 |
| 9 | 101,667 | 69,309 | 14,330 996 | 1112,655 | 99 904,530 | 289,145 | 4,177 827 | 1,438 219 |
| 10 | 107,583 | 73,342 | 15,312 572 | 1188,864 | 99 980,738 | 289,255 | 3,943 926 | 1,521 327 |
| 11 | 114,417 | 78,000 | 17,030 328 | 1322,230 | 100 114,105 | 289,448 | 3,710 875 | 1,616 869 |
| 12 | 119,333 | 81,352 | 19,091 636 | 1482,269 | 100 274,144 | 289,679 | 3,560 816 | 1,685 007 |
| 13 | 123,333 | 84,079 | 20,465 841 | 1588,963 | 100 380,838 | 289,834 | 3,447 158 | 1,740 564 |
| 14 | 127,500 | 86,920 | 21,594 652 | 1676,603 | 100 468,478 | 289,960 | 3,335 942 | 1,798 592 |
| $Vg_0 = m_0/\rho_0 = 4,025\ 801031.10^{-26}\ m^3$; $d_{g0} = \sqrt{6V_{g0}/\pi} = 4,252\ 241\ 23686 \cdot 10^{-9}$ M; $f_0 = \varphi \cdot T = 6,002\ 135\ 1087 \cdot 10^{12} s^{-1}$, $u_{\mu 0} = 2d_{g0} \cdot f_0 = 51045,052837$ m/s. | | | | | | | | |

(continued)

| No. | Rotational force, N $F=m_1.and\cdot2\pi\cdot n$ | Frontal drag X, $N$ | Frontal drag coefficient $c_x = X/F$ | Lifting force coefficient $c_y= Y/G_1$ | Aerodynamic quality $K = c_y/c_x$ | Wing efficiency $\eta = \dfrac{F-X}{F}$ | Rotational inertia $F_i = F\text{-}X$ | Inertial coefficient $k_i = F_i/X$ |
|---|---|---|---|---|---|---|---|---|
| 1 | 837,639 | 98,723 | 0,117 859 | 0,345 454 | 2,931 082 | 0,882 141 | 738,915 | 7,484 712 |
| 2 | 2307,323 | 104,488 | 0,045 285 | 0,909 091 | 20,074 881 | 0,954 715 | 2202,835 | 21,082 164 |
| 3 | 4259,374 | 112,162 | 0,026 333 | 1,745 484 | 66,284 013 | 0,973 667 | 4147,212 | 36,975 227 |
| 4 | 5473,546 | 116,944 | 0,021 365 | 2,309 091 | 108,076 290 | 0,978 635 | 5356,601 | 45,805 000 |
| 5 | 6730,911 | 121,885 | 0,018 108 | 2,836 364 | 156,632 647 | 0,981 892 | 6609,025 | 54,223 037 |
| 6 | 8066,029 | 127,132 | 0,015 761 | 3,400 000 | 215,715 639 | 0,984 238 | 7938,896 | 62,451 216 |
| 7 | 9435,504 | 132,504 | 0,014 043 | 3,927 272 | 279,660 471 | 0,985 957 | 9303,001 | 70,209 855 |
| 8 | 10837,094 | 138,025 | 0,012 736 | 4,581 817 | 359,743 242 | 0,987 264 | 10699,069 | 77,515 407 |
| 9 | 12175,371 | 143,318 | 0,011 771 | 5,309 085 | 451,026 351 | 0,988 229 | 12032,053 | 83,953 689 |
| 10 | 13633,560 | 148,997 | 0,010 929 | 5,672 726 | 519,056 366 | 0,989 071 | 13484,553 | 90,501 948 |
| 11 | 15420,474 | 155,996 | 0,010 116 | 6,309 089 | 623,662 829 | 0,989 884 | 15264,477 | 97,851 471 |
| 12 | 16774,182 | 161,355 | 0,009 619 | 7,072 726 | 735,266 497 | 0,990 381 | 16612,827 | 102,958 006 |
| 13 | 17917,582 | 165,835 | 0,009 356 | 7,581 817 | 819,075 704 | 0,990743 | 17751,726 | 107,031 587 |
| 14 | 19148,839 | 170,673 | 0,008 912 | 8,000 000 | 897,567 952 | 0,991087 | 18978,167 | 111,195 994 |

Table 2.

| Testing results of a wing with a profile according to Fig. 2 Wing geometry: L = 0,364 m; $b$ = 0,045 m; S = 0,01638 m²; $S_m$ = $L·h$=0,00364 m²; $h_2$=10 mm; $m_2$ = 0,55 kg; $G_2$ = 5,398663 N; $\alpha$=30°. Laboratory conditions: $P_0$ = 100258,0 Pa; $t_0$ = 16° C, $\rho_0$ = 1,2085 kg/m³. | | | | | | | |
|---|---|---|---|---|---|---|---|---|
| No. | Rotational frequency n, rps | Average circumferential speed $u=2\pi R·n$, m/s | Lifting force for a wing Y, N | Excess pressure along the lower surface, Pa $\Delta P = Y/S$ | Pressure along the lower surface $P_H = \Delta P + P_0$, Pa | Wall boundary layer speed, m/s $\upsilon_\pi = \sqrt{P_i/\rho_0}$ | Wall boundary layer acceleration factor, m/s $\beta = u_\pi / u$ | Wall boundary layer thickness, mm $\Delta h = h/\beta$ |
| 1 | 17,675 | 13,160 | 1,128 811 | 68,914 | 100326,914 | 288,128 | 21,894222 | 0,456741 |
| 2 | 24,667 | 18,366 | 2,355780 | 143,821 | 100401,821 | 288,235 | 15,693 972 | 0,637 187 |
| 3 | 33,333 | 24,818 | 4,318 930 | 263,671 | 100521,671 | 288,407 | 11,620899 | 0,860518 |
| 4 | 41,667 | 31,023 | 6,723789 | 410,487 | 100668,488 | 288,618 | 9,303356 | 1,074881 |
| 5 | 50,000 | 37,228 | 9,815 751 | 599,252 | 100857,252 | 288,888 | 7,759 978 | 1,288663 |
| 6 | 58,333 | 43,432 | 13,545 736 | 826,968 | 101084,968 | 289,214 | 6,659 017 | 1,501 723 |
| 7 | 66,500 | 49,513 | 17,570 194 | 1072,661 | 101330, 661 | 289,566 | 5,848276 | 1,709 905 |
| 8 | 74,833 | 55,717 | 22,183 597 | 1354,310 | 101612,310 | 289,968 | 5,204297 | 1,921 489 |

$V_{g0}$ = $m_0/\rho_0$ = 3,980 596 0695·10⁻²⁶ m³; $d_{g0} = \sqrt{6V_{g0}/\pi} = 4,236\ 265\ 41834·10^{-9}$ ${}_M$; $f_0 = \varphi·T$ = 6,022 795 902·10¹² s⁻¹,

$u_{\mu0}$ = $2d_{g0}·f_0$ = 51028.323 m/s.

| No. | Rotational force, N $F=m_1·and·2_\pi·n$ | Frontal drag X, N | Frontal drag coefficient $c_X$ = $X/F$ | Lifting force coefficient $c_y=Y/G_1$ | Aerodynamic quality $K= c_y/c_x$ | Wing efficiency $\eta = \dfrac{F-X}{F}$ | Rotational inertia $F_i$ = F-X | Inertial coefficient $k_i$ = $F_i/X$ |
|---|---|---|---|---|---|---|---|---|
| 1 | 803,818 | 185,685 | 0,231 004 | 0,209 091 | 0,905 139 | 0,768 996 | 618,133 | 3,328 926 |
| 2 | 1565,974 | 188,750 | 0,120 563 | 0,436 364 | 3,619 379 | 0,879 437 | 1376,823 | 7,294 412 |
| 3 | 2858,799 | 193,940 | 0,067 839 | 0,800 000 | 11,792 480 | 0,932 160 | 2664,859 | 13,740 600 |
| 4 | 4467,087 | 200,391 | 0,044 860 | 1,245 454 | 27,763 140 | 0, 955 140 | 4266,636 | 21,291 576 |
| 5 | 6432,537 | 208,291 | 0,032 381 | 1,818 182 | 56,149 894 | 0,967 619 | 6224,245 | 29,882 442 |

| No. | Rotational force, N $F=m_1 \cdot and \cdot 2_\pi \cdot n$ | Frontal drag X, $N$ | Frontal drag coefficient $c_X$ $= X/F$ | Lifting force coefficient $c_y = Y/G_1$ | Aerodynamic quality $K = c_y/c_x$ | Wing efficiency $\eta = \dfrac{F-X}{F}$ | Rotational inertia $F_i = F\text{-}X$ | Inertial coefficient $k_i = F_i/X$ |
|---|---|---|---|---|---|---|---|---|
| 6 | 8755,213 | 217,635 | 0,024 858 | 2,509 091 | 100,936 962 | 0,975 142 | 8537,577 | 39,228 810 |
| 7 | 11378,459 | 228,168 | 0,020 052 | 3,254 545 | 162,300 182 | 0,979 947 | 11150,291 | 48,868 772 |
| 8 | 14408,655 | 240,331 | 0,016 679 | 4,109 091 | 246,354 169 | 0,983 320 | 14168,324 | 58,953 459 |

Table 3.

Testing results of a wing with a profile according to Fig. 1 Wing geometry: $L = 0{,}346$ m; $b = 0{,}04$ $m$; $S = 0{,}01384$ $m^2$; $S_m = 0{,}002\ 076$ $m^2$; $m_3 = 0{,}204$ $kg$; $G_3 = 2{,}002432$ $N$; $\alpha = 9°56'$. Laboratory conditions: $P_0 = 99591{,}809$ $Pa$; $t_0 = 18°$ C, $\rho_0 = 1{,}19222$ $kg/m^3$.

| No. | $n$, rps | $u=2\pi R\cdot n$, m/s | $Y$, N | $\Delta P = Y/S$ | $P_H = \Delta P + P_0$, Pa | $\upsilon_\pi = \sqrt{P_i/\rho_0}$, m/s | $\beta = u_\pi/u$ | $\Delta h = h/\beta$ |
|---|---|---|---|---|---|---|---|---|
| 1 | 21,475 | 15,395 | 1,177 890 | 85,108 | 99676,917 | 289,147 | 18,781 895 | 0,319 456 |
| 2 | 28,458 | 20,402 | 2,208 544 | 159,577 | 99751,386 | 289,255 | 14,177 789 | 0,423 197 |
| 3 | 34,967 | 25,068 | 3,435 513 | 248,231 | 99840,039 | 289,384 | 11,543 951 | 0,519 753 |
| 4 | 41,700 | 29,895 | 5,055 112 | 365,254 | 99957,063 | 289,553 | 9,685677 | 0,619 471 |
| 5 | 48,750 | 34,949 | 6,969 183 | 503,554 | 100095,363 | 289,753 | 8,290754 | 0,723 698 |
| 6 | 54,917 | 39,370 | 9,030 491 | 652,492 | 100244,301 | 289,969 | 7,365228 | 0,814 639 |
| 7 | 61,417 | 44,030 | 11,435 350 | 826,254 | 100418,063 | 290,220 | 6,591 421 | 0,910 274 |
| 8 | 67,917 | 48,690 | 13,938 366 | 1007,107 | 100598,916 | 290,481 | 5,965937 | 1,005 709 |
| 9 | 73,500 | 52,693 | 16,686 776 | 1205,692 | 100797,501 | 290,768 | 5,518 153 | 1,087 320 |
| 10 | 78,833 | 56,516 | 19,238 872 | 1390,092 | 100981,901 | 291,034 | 5,149 584 | 1,165 143 |
| 11 | 87,567 | 62,777 | 23,901 354 | 1726,976 | 101318,785 | 291,518 | 4,643722 | 1,292 067 |
| 12 | 93,750 | 67,210 | 27,287 787 | 1971,661 | 101563,470 | 291,871 | 4,342668 | 1,381 639 |
| 13 | 100,000 | 71,691 | 31,655 797 | 2287,268 | 101879,077 | 292,324 | 4,077553 | 1,471 470 |
| 14 | 105,000 | 75,276 | 34,944 073 | 2524,861 | 102116,669 | 292664 | 3,887 886 | 1,543 255 |

$V_{g0} = m_0/\rho_0 = 4{,}035\ 053\ 26198\text{-}10^{-26}$ $m^3$; $\quad d_{g0} = \sqrt{6V_{g0}/\pi} = 4{,}255\ 496\ 29232\cdot10^{-9}$ $M$; $f_0 = P_0 V_{g0}/h = 6{,}064\ 624\ 12486\cdot10^{12}$ s$^{-1}$,

$u_{\mu 0} = 2d_{g0}\cdot f_0 = 51615{,}971$ $m/s$.

| No. | Rotational force, N $F = m_1\cdot and\cdot 2\pi\cdot n$ | Frontal drag $X$, N | Frontal drag coefficient $c_x = X/F$ | Lifting force coefficient $c_y = Y/G_1$ | Aerodynamic quality $K = c_y/c_x$ | Wing efficiency $\eta = \dfrac{F-X}{F}$ | Rotational inertia $F_i = F\text{-}X$ | Inertial coefficient $k_i = F_i/X$ |
|---|---|---|---|---|---|---|---|---|
| 1 | 423,763 | 37,324 | 0,088 079 | 0,588 235 | 6,678 512 | 0,911 921 | 386,438 | 10,353 471 |

(continued)

| No. | Rotational force, $N$ $F = m_1 \cdot and \cdot 2\pi \cdot n$ | Frontal drag $X$, $N$ | Frontal drag coefficient $c_x = X/F$ | Lifting force coefficient $c_y = Y/G_1$ | Aerodynamic quality $K = c_y/c_x$ | Wing efficiency $\eta = \dfrac{F - X}{F}$ | Rotational inertia $F_i = F - X$ | Inertial coefficient $k_i = F_i/X$ |
|---|---|---|---|---|---|---|---|---|
| 2 | 744,196 | 38,583 | 0,051 845 | 1,102 942 | 21,273 645 | 0,948 155 | 705,612 | 18,288 105 |
| 3 | 1123,539 | 40,073 | 0,035 667 | 1,715 686 | 48,102819 | 0,964 333 | 1083,465 | 27,037070 |
| 4 | 1597,882 | 41,938 | 0,026 246 | 2,524 510 | 96,184 359 | 0,973 753 | 1555,943 | 37,100210 |
| 5 | 2183,833 | 44,241 | 0,020 258 | 3,480 392 | 171,798 910 | 0,979 741 | 2139,592 | 48,361 942 |
| 6 | 2771,292 | 46,553 | 0,016 798 | 4,509 804 | 268,467 018 | 0,983 202 | 2724,739 | 58,529 643 |
| 7 | 3466,149 | 49,287 | 0,014 219 | 5,710 784 | 401,616 928 | 0,985 781 | 3416,863 | 69,326 054 |
| 8 | 4238,657 | 52,322 | 0,012 344 | 6,960 784 | 563,903 928 | 0,987 656 | 4186,336 | 80,011 553 |
| 9 | 4964,212 | 55,182 | 0,011 116 | 8,333 333 | 749,669 001 | 0,988 884 | 4909,029 | 88,960 284 |
| 10 | 5710,702 | 58,118 | 0,010 177 | 9,607 843 | 944,066 637 | 0,989 823 | 5652,584 | 97,260000 |
| 11 | 7046,137 | 63,373 | 0,008 994 | 11,936 275 | 1327,132 044 | 0,991 006 | 6982,763 | 110,184778 |
| 12 | 8076,351 | 67,422 | 0,008 348 | 13,627 451 | 1632,414 391 | 0,991 652 | 8008,929 | 118,788 685 |
| 13 | 9189,136 | 71,813 | 0,007 815 | 15,808 823 | 2022,886 344 | 0,992 185 | 9117,323 | 126,959 322 |
| 14 | 10131,083 | 75,519 | 0,007 454 | 17,450 980 | 2341,082 126 | 0,992 546 | 10055,563 | 133,151 899 |

Table 4.

| Testing results of a wing with NACA-23015 profile Wing geometry: $L$ = 0,322 $m$; $b$ = 0,04 $m$; $S$ = 0,01288 $m^2$; $S_m$ = 0,001 932 $m^2$; $h$=6 $mm$; $m_4$ = 0,2405 $kg$; $G_4$ = 2,360 688 $N$; $\alpha$=1°. Laboratory conditions: $P_0$ = 98781,875 $Pa$; $t_0$ = 15° C, $\rho_0$ = 1,19496 $kg/m^3$. | | | | | | | | |
|---|---|---|---|---|---|---|---|---|
| No. | $n$, rps | $u=2\pi R \cdot n$, m/s | Lifting force, experimental value $Y$, $N$ | $\Delta P=Y/S$, Pa | $\beta$ Theoretical value | $U_\pi=\beta \cdot u$, m/s | $\Delta h = h/\beta$, mm | Lifting force, theoretical value $Y= (P_B\text{-}P_H) \cdot S$, N |
| 1 | 38,017 | 25,917 | 0,834 339 | 64,772 | 11,101 149 | 287,708 | 0,540485 | - 0,834 339 |
| 2 | 53,333 | 36,358 | 1,472 363 | 114,313 | 7,924 002 | 288,104 | 0,757 184 | -1,472363 |
| 3 | 65,875 | 44,908 | 2,110 386 | 163,849 | 6,416 140 | 288,136 | 0,935142 | -2,110386 |
| 4 | 79,167 | 53,970 | 2,895 646 | 224,817 | 5,343 972 | 288,414 | 1,122 760 | -2,895646 |
| 5 | 91,250 | 62,207 | 3,729 985 | 289,596 | 4,640 678 | 288,683 | 1,292914 | -3,729985 |
| 6 | 101,667 | 69,309 | 4,613 403 | 358,183 | 4,170 215 | 289,033 | 1,438 774 | -4,613 403 |
| 7 | 112,000 | 76,352 | 5,693 136 | 442,013 | 3,788 395 | 289,251 | 1,583 784 | -5,693 136 |
| 8 | 121,667 | 82,943 | 6,772 868 | 525,844 | 3,491 587 | 289,603 | 1,718 416 | -6,772868 |
| 9 | 132,500 | 90,329 | 7,852 601 | 609,6730 | 3,209 490 | 289,910 | 1,869456 | -7,852601 |
| 10 | 139,833 | 95,328 | 8,785 097 | 682,072 | 3,042 419 | 290,028 | 1,972 114 | -8,785097 |

$$V_{g0} = m_0/\rho_0 = 4{,}025\ 801\ 031 \cdot 10^{-26}\ m^3;\quad d_{g0} = \sqrt{6V_{g0}/\pi} = 4{,}252\ 241\ 23686 \cdot 10^{-9}\ M;\quad f_0 = P_0 V_{g0}/h = 6{,}001\ 510\ 47643 \cdot 10^{12}\ s^{-1},$$

$$u_{\mu 0} = 2d_{g0} \cdot f_0 = 51039{,}741\ m/s.$$

| No. | $F=m_1 \cdot and \cdot 2_\pi \cdot n$, N | $X$, N | $C_x = X/F$ | $c_y=Y/G_4$ | $K= c_y/c_X$ | $\eta = \dfrac{F-X}{F}$ | Pressure along the upper surface of a wing $P_B=\rho_0 u_\pi^2 -\Delta P$ | Pressure along the lower surface of a wing $P_H=\rho_0 u_\pi^2$, Pa |
|---|---|---|---|---|---|---|---|---|
| 1 | 1488,872 | 183,296 | 0,123 111 | 0,353 430 | 2,870 824 | 0,876 889 | 98 849,437 | 98 914,209 |
| 2 | 2930,157 | 189,585 | 0,064 701 | 0,623 701 | 9,639 699 | 0,935 298 | 99 072,396 | 99 186,709 |
| 3 | 4470,327 | 195,545 | 0,043 743 | 0,893 971 | 20,436 908 | 0,956 257 | 99 044,556 | 99 208,408 |
| 4 | 6456,417 | 203,525 | 0,031 523 | 1,226 611 | 38,911 616 | 0,968 477 | 99 175,216 | 99 400,033 |

EP 2 567 891 A1

(continued)

| No. | $F=m_1 \cdot and \cdot 2_\pi \cdot n$, N | X, N | $C_x = X/F$ | $c_y = Y/G_4$ | $K = c_y/c_X$ | $\eta = \dfrac{F-X}{F}$ | Pressure along the upper surface of a wing $P_B = \rho_0 u_\pi^2 - \Delta P$ | Pressure along the lower surface of a wing $P_H = \rho_0 u_\pi^2$, Pa |
|---|---|---|---|---|---|---|---|---|
| 5 | 8577,625 | 212,014 | 0,024 717 | 1,580 041 | 63,925 089 | 0,975 283 | 99 295,598 | 99 585,193 |
| 6 | 10 647,915 | 220,409 | 0,020 699 | 1 , 954 262 | 94,410 123 | 0,979 300 | 99 469,168 | 99 827,351 |
| 7 | 12922,109 | 229,423 | 0,017 754 | 2,411 643 | 135,834 215 | 0,982 246 | 99 536,041 | 99 978,054 |
| 8 | 15 249,215 | 238,807 | 0,015 660 | 2,869 023 | 183,203 781 | 0,984 339 | 99 695,124 | 100 220,968 |
| 9 | 18085,812 | 250,095 | 0,013 828 | 3,326 403 | 207,475 506 | 0,986 172 | 99 824,104 | 100 433,777 |
| 10 | 20143,044 | 258,154 | 0,012 816 | 3,721 414 | 290,374 787 | 0,987 184 | 99 833,332 | 100 515,405 |

Table 5

| ΔP, Pa | u, m/s | | | | | | |
|---|---|---|---|---|---|---|---|
| | Excess pressure along the upper and lower surfaces of a wing with NACA-23015 profile | | | | | | |
| | 25,917 | 44,908 | 62,207 | 69,309 | 76,352 | 82,943 | 95,328 |
| $\Delta P_B$ | 67,562 | 262,680 | 513,723 | 687,293 | 754,166 | 913,249 | 1051,458 |
| $\Delta P_H$ | 132,334 | 426,530 | 803,318 | 1045,476 | 1196,179 | 1439,093 | 1733,530 |
| $\Delta P_B -- \Delta P_H$ | -64,772 | -163,85 | -289,595 - | 358,183 | - 442,013 | -525,844 | - 682,072 |

Table 6

| ΔP, Pa | u, m/s | | | | | | |
|---|---|---|---|---|---|---|---|
| | Excess pressure along the lower surface of a wing with a profile according to Fig. 2 | | | | | | |
| | 30,172 | 46,471 | 61,014 | 69,309 | 78,000 | 84,079 | 86,92 |
| $\Delta P_B$ | 98 791,8 | 98791,8 7 | 98791,8 7 | 98791,87 | 98791,87 | 98791,87 | 98791,87 |
| $\Delta P_H$ | 98982,86 | 99275,8 0 | 99614,9 3 | 99904,530 | 100114,10 | 100380,83 | 100468,48 |
| $\Delta P_B - \Delta P_H$ | -190,989 | -483,928 | -823,060 | -1112,655 | -1322,230 | -1588,963 | -1676,603 |

**Claims**

1.  Method for forming lifting force for an aircraft with a longitudinal axis and a wing having a part of its upper contour of the profile as a straight line, including creation of an acute angle of the front edge of the wing, placing said straight line of the upper contour parallel to the longitudinal axis of an aircraft, and directing with said acute angle of the front edge of the wing the windstream onto the lower contour of the wing.

2.  A wing profile for an aircraft with a longitudinal axis and a wing which has sharp front and tailing edges, as well as the upper and lower contours, for realization of method of Claim 1, **characterized in that** said lower contour is rectilinear from the front to the tailing edge, and said upper contour has a rectilinear section parallel to the longitudinal axis of an aircraft and connected with tailing edge by a flat curve.

3.  A wing profile for an aircraft with a longitudinal axis and a wing which has sharp front and tailing edges, as well as the upper and lower contours, partially represented by parallel lines for realization of method of Claim 1, **characterized in that** the above mentioned rectilinear sections of the upper and lower contours are connected with the front and tailing edges by flat curves, whereas the upper contour is parallel to the longitudinal axis of an aircraft.

4.  A wing profile for an aircraft with a longitudinal axis and a wing which has sharp front and tailing edges, as well as the upper and lower contours, whereas the upper contour has a rectilinear section for realization of method of Claim 1, **characterized in that** the above mentioned rectilinear section of the upper contour is parallel to the longitudinal axis of an aircraft, and the lower contour is represented by a flat curve connecting the front and tailing edge of a wing profile.

Fig. 1

Fig. 2

Fig. 3

## INTERNATIONAL SEARCH REPORT

| International application No. |
| --- |
| PCT/RU 2011/000744 |

| A. CLASSIFICATION OF SUBJECT MATTER |
| --- |
| B64C 3/14 (2006.01) |
| According to International Patent Classification (IPC) or to both national classification and IPC |

| B. FIELDS SEARCHED |
| --- |
| Minimum documentation searched (classification system followed by classification symbols) |
| B64C 3/10, 3/14, 21/02 |
| Documentation searched other than minimum documentation to the extent that such documents are included in the fields searched |
| |
| Electronic data base consulted during the international search (name of data base and, where practicable, search terms used) |
| RUPAT, PatSearch, Esp@cenet, USPTO DB, EAPATIS |

### C. DOCUMENTS CONSIDERED TO BE RELEVANT

| Category* | Citation of document, with indication, where appropriate, of the relevant passages | Relevant to claim No. |
| --- | --- | --- |
| X<br>Y<br>Y | US 1180271 A (J.P. TARBOX) 18.04.1916,<br>p. 1 , right col., lines 86-105, p. 2, left col., lines 1-26, fig. 14<br><br>Aerodinamika letatelnykh apparatov. Pod red. d-ra tekhn. nauk prof. G. A. Kolesnikova, M., Mashinostroenie, 1993, p. 256-261, fig. 5.12 | 1,4<br>2,3<br>2 |
| Y | US 6378802 BI (MANUEL MUNOZ SAIZ) 30.04.2002, the abstract, fig. 1 | 3 |
| A | Osnovy prikladnoi aerogazodinamiki. Pod red. d-ra tekhn. nauk prof. N. F. Krasnova, M., "Vysshaya shkola", 1990, book 1, p. 18-25, 44-49 | 1-4 |
| A | US 2126502 A (FRANK A. REDLINGER) 09.08.1938, p. 2, left col., lines 36-62, fig. 2, 3 | 1-4 |

| ☐ Further documents are listed in the continuation of Box C. | ☐ See patent family annex. |
| --- | --- |

| * Special categories of cited documents: | "T" | later document published after the international filing date or priority date and not in conflict with the application but cited to understand the principle or theory underlying the invention |
| --- | --- | --- |
| "A" document defining the general state of the art which is not considered to be of particular relevance | | |
| "E" earlier application or patent but published on or after the international filing date | "X" | document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | | |
| "P" document published prior to the international filing date but later than the priority date claimed | "&" | document member of the same patent family |

| Date of the actual completion of the international search | Date of mailing of the international search report |
| --- | --- |
| 20 December 2011 (20.12.2011) | 26 January 2012 (26.01.2012) |
| Name and mailing address of the ISA/ | Authorized officer |
| | |
| Facsimile No. | Telephone No. |

Form PCT/ISA/210 (second sheet) (July 1998)

**EP 2 567 891 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6378802 B

**Non-patent literature cited in the description**

- **S.T. KASHAFUTDINOV ; V.N. LUSHIN.** Atlas of the aerodynamic characteristics of wing profiles. Novosibirsk, 1994
- Helicopters of countries around the world. 1994
- Encyclopedia of physics. 1992, vol. 3, 670
- **D.H. BAZIEV.** Fundamentals of a unified theory of physics. *Pedagogics,* 1994, 619
- **A.M. VOLODKO ; M.P. VERKHOZIN ; V.A. GORSHKOV.** Helicopters. Guidebook. 1992
- **E.I. RUZHITSKY.** Helicopters. AST, 1997

- **D.H. BAZIEV.** Fundamentals of a unified theory of physics. *Pedagogics,* 1994, 640
- **V.N. DALIN.** *Specifications and construction of helicopters,* 1983
- **T.I. LIGUM ; S.Y. SKRIPCHENKO ; L.A. CHULSKY ; A.V. SHISHMAREV ; S.I. YUROVSKY.** Aerodynamics of the Tu-154 airliner. *Transport,* 1977
- **S.T. KASHAFUTDINOV ; V.N. LUSHIN.** Atlas of the aerodynamic characteristics of wing profiles. 1994
- Encyclopedia of physics. 1992, vol. 3